# EUROPÄISCHE PATENTSCHRIFT

(11) **EP 1 397 540 B1**
(45) Veröffentlichungstag und Bekanntmachung des Hinweises auf die Patenterteilung: **13.07.2005**
(21) Anmeldenummer: 02740510.9
(22) Anmeldetag: 25.04.2002
(51) Int. Cl.: D01H 4/12

(54) **ROTORWELLE EINES OFFENEND-SPINNROTORS**
ROTOR SHAFT FOR AN OPEN-END SPINNING ROTOR
ARBRE DE ROTOR D'UN ROTOR DE FILAGE A EXTREMITE OUVERTE

(30) Priorität: 20.06.2001 DE 10130736
(43) Veröffentlichungstag der Anmeldung: 17.03.2004
(73) Patentinhaber: Rieter Ingolstadt Spinnereimaschinenbau AG, 85055 Ingolstadt (DE)
(72) Erfinder: BURCHERT, Mathias, 73760 Ostfildern (DE); SCHMID, Friedbert, 73337 Bad Überkingen (DE)
(74) Vertreter: Patentanwälte Ruff, Wilhelm, Beier, Dauster & Partner
(86) Internationale Anmeldenummer: PCT/EP2002/004556
(87) Internationale Veröffentlichungsnummer: WO 2003/000972

(56) Entgegenhaltungen:
- DE-A- 19 542 908
- DE-A- 19 652 507
- US-A- 5 349 809

## Beschreibung

Die Erfindung betrifft eine Rotorwelle eines Offenend-Spinnrotors mit einem zapfenartigen Wellenende verringerten Durchmessers und einer stirnendigen, einem Spurlager zuordenbaren Abstützfläche, die mit einem verschleißfesten Einsatz versehen ist.

Eine Rotorwelle dieser Art ist durch die DE 196 52 507 A1 Stand der Technik. Der Endbereich der Rotorwelle ist dabei einem mit Fett gefüllten Spurlagergehäuse zugeordnet, welches zum Einführen der Rotorwelle hintereinander mit einer größeren und einer kleineren Öffnung versehen ist, wobei diese Öffnungen bezüglich der Rotorwelle bei Betrieb Dichtungsspalte bilden. Die größere Öffnung ist dem normalen Durchmesser der Rotorwelle, die kleinere Öffnung dem zapfenartigen Wellenende zugeordnet.

Bei den heute anzustrebenden hohen Drehzahlen von Offenend-Spinnrotoren spielen die Abmessungen der Rotorwellen eine keineswegs untergeordnete Rolle, weil selbst kleinste Erhöhungen der kritischen Drehzahlen der Rotorwelle dazu führen, dass der Offenend-Spinnrotor und damit die Offenend-Spinnmaschine insgesamt mit höheren Betriebsdrehzahlen laufen kann. Aus diesem Grunde genügt es nicht mehr, das zapfenartige Wellenlänge so zu dimensionieren, dass eine möglichst gute Abdichtung des Endbereichs der Rotorwelle gegenüber dem mit Fett gefüllten Spurlagergehäuse erreicht wird. Vielmehr muss das zapfenartige Wellenende auch im Hinblick auf eine Erhöhung der kritischen Drehzahl der Rotorwelle insgesamt dimensioniert werden.

Der Erfindung liegt somit die Aufgabe zu Grunde, eine Rotorwelle der eingangs genannten Art hinsichtlich einer Dichtung am Spurlager als auch hinsichtlich hoher kritischer Drehzahlen zu optimieren.

Die Aufgabe wird dadurch gelöst, dass der verringerte Durchmesser des zapfenartigen Wellenendes wenigstens das 0,68-fache des Durchmessers der Rotorwelle und wenigstens das 0,82-fache der Länge des zapfenartigen Wellenendes beträgt. Im Dokument US 5 349 809 A wird eine Rotorwelle offenbart, mit einem Wellenende dessen Durchmesser auf das 0,6-fache verringert ist. Diese Verringerung wird vorgenommen um Deformationen des Wellenendes zu vermeiden. Das Dokuments gibt dabei keine Angaben über die Länge des Wellenendes.

Die genannten Abmessungen des zapfenartigen Wellenendes wurden empirisch entsprechend der gestellten Aufgabe optimiert und sind insbesondere auf einen Durchmesser der Rotorwelle zugeschnitten, der im Bereich vom 8,0 bis 8,3 mm liegt. Bei einem Unterschreiten eines Durchmessers der Rotorwelle von 8,0 mm würde die kritische Drehzahl des Offenend-Spinnrotors insgesamt zu sehr nach unten gesenkt werden, während bei einem Überschreiten eines Durchmessers von 8,3 mm die Geschwindigkeit eines den Offenend-Spinnrotor antreibenden Tangentialriemens so hoch würde, dass die Lebensdauer des Tangentialriemens beeinträchtigt würde. Das an diesen Durchmesserbereich angepasste zapfenartige Wellenende ist kompakter als die üblichen bisher praktizierten Wellenenden, also selbst im Bereich des verringerten Durchmessers etwas größer und insgesamt auch kürzer. Ein Optimum hat sich dann ergeben, wenn der verringerte Durchmesser des zapfenartigen Wellenendes etwa das 0,7-fache des Durchmessers der Rotorwelle und etwa das 0,9-fache der Länge des zapfenartigen Wellenendes beträgt.

Auch der verschleißfeste Einsatz, der beispielsweise als die Abstützfläche enthaltender Keramikstift ausgebildet sein kann, darf bei dieser Betrachtung nicht vernachlässigt werden. Es hat sich gezeigt, dass das zapfenartige Wellenende durch den verschleißfesten Einsatz um einen Betrag von etwa 0,1 bis 0,5 mm verlängert werden kann. Größere Verlängerungen haben schon wieder einen negativen Einfluss auf die Höhe der möglichen Betriebsdrehzahl des Offenend-Spinnrotors.

Weitere Vorteile und Merkmale der Erfindung ergeben sich aus der nachfolgenden Beschreibung eines Ausführungsbeispiels.

Es zeigen:
Figur 1 eine teilweise geschnittene Seitenansicht auf einen Offenend-Spinnrotor mit einer entsprechend der Erfindung versehenen Rotorwelle,
Figur 2 in vergrößerter Darstellung das zapfenartige Wellenende der Rotorwelle.

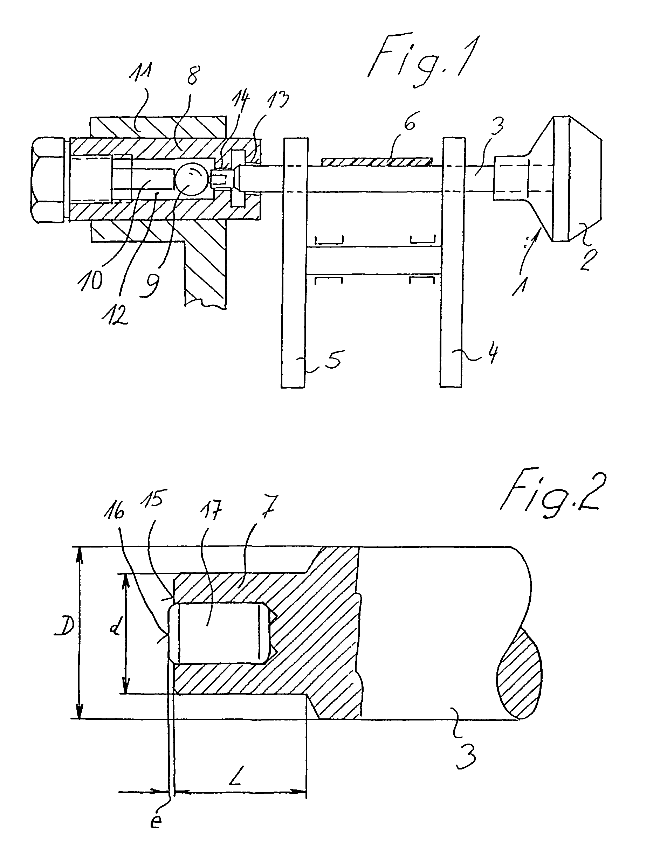

Ein Offenend-Spinnrotor 1 besteht in bekannter Weise aus einem Rotorteller 2 und einer fest damit verbundenen Rotorwelle 3, die in radialer Richtung in ebenfalls bekannter Weise auf Stützscheibenpaaren 4 und 5 gelagert und über einen Tangentialriemen 6 angetrieben ist. Die Rotorwelle 3 besitzt ein zapfenartiges Wellenende 7, dessen Durchmesser d kleiner ist als der vorangehende Durchmesser D der Rotorwelle 3.

Der Endbereich der Rotorwelle 3 mit dem zapfenartigen Wellenende 7 ist einem Spurlager 8 zugeordnet, gegen welches die Rotorwelle 3 mittels eines bei Betrieb des Offenend-Spinnrotors 1 erzeugten Axialschubes gedrückt ist. Das Spurlager 8 enthält eine Stützkugel 9, an welcher sich die Rotorwelle 3 abstützt und die ihrerseits an einem bolzenartigen Widerlager 10 anliegt. Das Spurlager 8 selbst ist in einem nur angedeuteten Maschinengehäuse 11 enthalten.

Das Innere des Spurlagers 8 enthält eine mit Fett gefüllte Kammer 12, in welche der Endbereich der Rotorwelle 3 durch zwei unterschiedlich große Bohrungen 13 und 14 einführbar ist. Die Bohrungen 13 und 14 bilden gegenüber den Durchmessern D und d der Rotorwelle 3 berührungslose Spaltdichtungen.

Das stirnseitige Ende 15 der Rotorwelle 3 ist mit einer axialen Abstützfläche 16 versehen, die an einem Keramikstift 17 angebracht ist, der in eine entsprechend angepasste Bohrung des zapfenartigen Wellenendes 7 eingesetzt ist.

Die Rotorwelle 3 muss bei der gewählten axialen und radialen Lagerung eine kritische Drehzahl aufweisen, die Betriebsdrehzahlen im Bereich bis zu 150.000 min⁻¹ möglich macht. Dies ist dann der Fall, wenn die Rotorwelle 3 einen Durchmesser D im Bereich von 8,0 bis 8,3 mm aufweist. Die obere Grenze wird dadurch bestimmt, dass die Laufgeschwindigkeit des Tangentialriemens 6 eine bestimmte Höhe nicht überschreiten sollte.

Das zapfenartige Wellenende 7, welches bei herkömmlichen Rotorwellen 3 in erster Linie auf eine möglichst gute Dichtungswirkung bezüglich des Spurlagers 8 dimensioniert war, ist nun so ausgelegt, dass auch das zapfenartige Wellenende 7 möglichst zur Erhöhung der kritischen Drehzahl der Rotorwelle 3 insgesamt beiträgt. Aus diesem Grunde ist vorgesehen, dass der verringerte Durchmesser d des zapfenartigen Wellenendes 7 wenigstens das 0,68-fache des Durchmessers D der Rotorwelle 3 und außerdem wenigstens das 0,82-fache der Länge L des zapfenartigen Wellenendes 7 beträgt. Der Betrag e, um welchen der verschleißfeste Einsatz 17 das zapfenartige Wellenende 7 überragt, sollte im Bereich von 0,1 bis 0,5 mm liegen.

## Patentansprüche

1. Rotorwelle (2) eines Offenend-Spinnrotors (1) mit einem zapfartigen Wellenende (7) verringerten Durchmessers (d) und einer stirnendigen, einem Spurlager (8) zuordenbaren Abstützfläche (16), die mit einem verschleißfesten Einsatz (17) versehen ist, **dadurch gekennzeichnet, dass** der verringerte Durchmesser (d) des zapfenartigen Wellenendes (7) wenigstens das 0,68-fache des Durchmessers (D) der Rotorwelle (3) und wenigstens das 0,82-fache der Länge (L) des zapfenartigen Wellenendes (7) beträgt.

2. Rotorwelle nach Anspruch 1, **dadurch gekennzeichnet, dass** der verringerte Durchmesser (d) des zapfenartigen Wellenendes (7) etwa das 0,7-fache des Durchmessers (D) der Rotorwelle (3) und etwa das 0,9-fache der Länge (L) des zapfenartigen Wellenendes (7) beträgt.

3. Rotorwelle nach Anspruch 1oder 2, **dadurch gekennzeichnet, dass** der verschleißfeste Einsatz (17) das zapfenartige Wellenende (7) um einen Betrag (e) von etwa 0,1 bis 0,5 mm verlängert.

## Claims

1. A rotor shaft (3) of an open-end spinning rotor (1) having a peg-like shaft end (7) with a reduced diameter (d) and a front-end supporting surface which can be arranged at a step bearing (8), said supporting surface being provided with a wear-resistant insert (17), **characterized in that** the reduced diameter (d) of the peg-like shaft end (7) measures at least 0.68 times the diameter (D) of the rotor shaft (3) and at least 0.82 times the length (L) of the peg-like shaft end (7).

2. Rotor shaft according to claim 1, **characterized in that** the reduced diameter (d) of the peg-like shaft end (7) measures approximately 0.7 times the diameter (D) of the rotor shaft (3) and approximately 0.9 times the length (L) of the peg-like shaft end (7).

3. Rotor shaft according to claim 1 or 2, **characterized in that** the wear-resistant insert (17) extends the peg-like shaft end (7) by an amount (e) of approximately 0.1 to 0.5 mm.

## Revendications

1. Arbre (3) d'un rotor de filage à fibre libérée (1) avec un bout d'arbre en forme de tenon (7) de diamètre réduit (d) et une face d'appui (16) à l'extrémité avant pouvant être affectée à une crapaudine (8) et pourvue d'un insert (17) résistant à l'usure, **caractérisé par le fait que** le diamètre réduit (d) du bout d'arbre en forme de tenon (7) mesure au moins 0,68 fois le diamètre (D) de l'arbre de rotor (3) et au moins 0,82 fois la longueur (L) du bout d'arbre en forme de tenon (7).

2. Arbre de rotor selon la revendication 1, **caractérisé par le fait que** le diamètre réduit (d) du bout d'arbre en forme de tenon (7) mesure environ 0,7 fois le diamètre (D) de l'arbre de rotor (3) et environ 0,9 fois la longueur (L) du bout d'arbre en forme de tenon (7).

3. Arbre de rotor selon la revendication 1 ou 2, **caractérisé par le fait que** l'insert résistant à l'usure (17) prolonge le bout d'arbre en forme de tenon (7) d'une valeur (e) comprise entre environ 0,1 et 0,5 mm.
